**Europäisches Patentamt**

**European Patent Office**

**Office européen des brevets**

(19)

(11) Numéro de publication: **0 094 280**
**B1**

(12) # FASCICULE DE BREVET EUROPÉEN

(45) Date de publication du fascicule du brevet:
18.03.87

(51) Int. Cl.⁴: **B 60 P 1/64,** B 60 P 3/07

(21) Numéro de dépôt: 83400811.2

(22) Date de dépôt: 25.04.83

(54) **Remorque basculante pour le transport de baraques de chantiers, de maisons mobiles de plateaux ou d'autres éléments analogues.**

(30) Priorité: 29.04.82 FR 8207612

(43) Date de publication de la demande:
16.11.83 Bulletin 83/46

(45) Mention de la délivrance du brevet:
18.03.87 Bulletin 87/12

(84) Etats contractants désignés:
AT BE CH DE FR GB IT LI LU NL SE

(56) Documents cité:
DE-A-2 212 615
FR-A-414 049
FR-A-555 029
FR-A-770 293
FR-A-2 222 243
FR-A-2 257 463
FR-A-2 264 679
FR-A-2 271 068
FR-A-2 510 955
US-A-2 703 658
US-A-2 745 566

(73) Titulaire: **Cassagne, Daniel, Bretx, F-31530 Levignac s/Save (FR)**

(72) Inventeur: **Cassagne, Daniel, Bretx, F-31530 Levignac s/Save (FR)**

(74) Mandataire: **Ravina, Bernard, Cabinet Bernard RAVINA 24, boulevard Riquet, F-31000 Toulouse (FR)**

LIBER, STOCKHOLM 1987

EP 0 094 280 B1

## Description

La présente invention concerne une remorque basculante pour le transport de baraques de chantiers, de maisons mobiles, de plateaux ou d'autres éléments analogues.

On connait des remorques adaptées à transporter de tels éléments sans avoir à les démonter, mais pour la plupart ces éléments doivent être soulevés du sol à une hauteur suffisamment grande pour que l'on puisse passer la remorque dessous.

Cette opération est souvent délicate car la remorque doit être parfaitement conduite afin de ne pas renverser les étais ou les béquilles soutenant les éléments et afin de bien se positionner sous l'élément.

Certaines remorques connues sont dotées d'une plate forme basculante mais celle-ci ne peut être utilisée que comme benne et ne sert pas au chargement des éléments énoncés, ci-dessus.

On connait également des remorques adaptées pour le chargement des charges roulantes.

De telle remorques sont constituées par un plateau basculant sur cadre support lequel est doté de roues et d'une tête d'attelage à un véhicule tracteur.

Ces remorques sont en outre dotées de moyens moteurs pour hisser la charge et pour créer le basculement du plateau.

C'est ainsi que l'on connait du document FR-A-2 257 463 une remorque articulée avec plateau basculant et un treuil qui actionne un cable de hissage de la charge.

La particularité d'une telle remorque est que le cable de hissage s'enroule tout d'abord autour d'une poulie du cadre puis autour d'une poulie du plateau de manière à ce que lorsque la charge est hissée sur le plateau, le cable par appui sur le galet du plateau, provoque le basculement de ce dernier.

Cependant avec un tel système, le déchargement de la charge, est aléatoire. En effet il est necessaire que le centre de gravité soit en arrière de l'axe de pivotement du plateau sinon ce dernier ne peut pivoter.

Cette remorque n'étant pas équipée de moyens pour tirer la charge en arrière lors du déchargement elle ne peut recevoir que des charges roulantes.

On connait également du document FR-A-2 271 068 une installation pour la manutention d'une charge.

Cette installation n'est pas non plus équipée de moyens pour tirer la charge dans le sens du déchargement et cette installation ne peut recevoir que des charges sur roues qui peuvent se décharger seules lorsque plateau est inclinée vers l'arrière.

On connait également du brevet US-A-2 703 658 une remorque qui ne peut recevoir que des charges sur roues. Cette remorque est de plus équipée de deux moyens moteurs respectivement pour tracter la charge dans le sens du chargement ou déchargement et pour incliner le plateau.

On connait également des remorques destinées à recevoir des charges non roulantes mais ces dernières sont équipées de deux moyens moteurs respectivement pour tracter la charge dans le sens du chargement et déchargement et pour incliner le plateau. Une telle remorque est notament décrite dans le document FR-A-2 264 679.

Enfin on connait du brevet FR-A-2 510 955 une remorque dont le plateau bascule et simultanément coulisse sur des galets du chassis porteur.

Ces différentes remorques présentent soit l'inconvénient de ne pouvoir recevoir que des charges roulantes soit d'utiliser deux organes moteurs respectivement pour tracter la charge sur le plateau et pour créer le basculement de ce dernier.

La présente invention à pour objet de résoudre les inconvénients précédemment énoncés en mettant en oeuvre une remorque basculante pour le transport de baraques de chantier de maisons mobiles, de plateaux ou d'autres éléments analogues comportant un plateau doté de glissières entre lesquelles est guidée et maintenue la charge, un cadre support doté d'éléments de roulement et d'une tête d'attelage à un véhicule tracteur, le dit plateau étant monté en basculement sur le dit cadre suivant un axe transversal situé en avant de l'essieu arrière du véhicule, et un treuil étant monté sur la dite remorque pour actionner un câble, la dite remorque étant caractérisée essentiellement en ce que le treuil est monté sur le cadre support en avant du plateau basculant et dans l'angle décrit par le plateau entre ses positions extrêmes de basculement, que le câble formant une boucle sans fin et fixé par ses deux extrémités au treuil s'enroule autour d'un premier galet monté à l'arrière du plateau basculant et qu'un deuxième galet monté en avant du plateau basculant est disposé sous le brin de dessus du câble et au dessus du brin de dessous du câble et que le brin de dessus du câble est doté d'un brin d'arrimage de la charge, en sorte que lors du déchargement sous l'effet de la traction de la charge hors du plateau, le brin de dessous du cable appuie sous le deuxième galet et aussure le basculement du plateau vers l'arrière et en sorte que lors du hissage de la charge le brin de dessus du câble en s'appuyant sur le deuxième galet force le basculement du plateau vers sa position horizontale.

De plus, la remorque selon l'invention est de fabrication aisée et n'utilise que des éléments simples.

D'autres caractéristiques et avantages apparaîtront à la lecture de la description et en se referant aux dessins donnés à titre d'exemples non limitatifs en lesquels:

- la figure 1 est une vue de côté de la remorque selon l'invention,
- la figure 2 est une vue de dessus de la remorque,

- la figure 3 est une vue de détail en coupe des organes de maintien en position horizontale selon la ligne I/I de la figure 2,

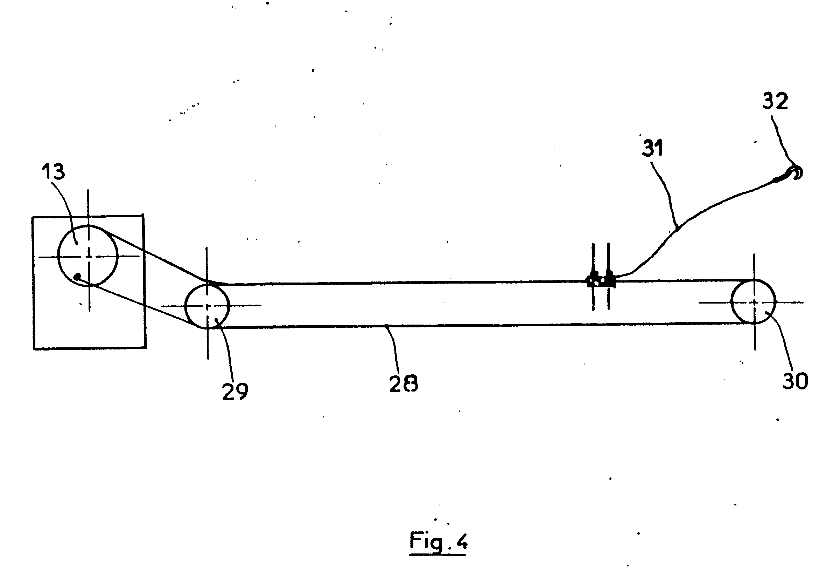

- la figure 4 est une vue schématique du câble du treuil,

- la figure 5 est une vue de côté représentant le plateau basculant en position inclinée.

L'invention concerne une remorque basculante pour le transport de baraques de chantiers, de maisons mobiles, de plateaux ou d'autres éléments analogues.

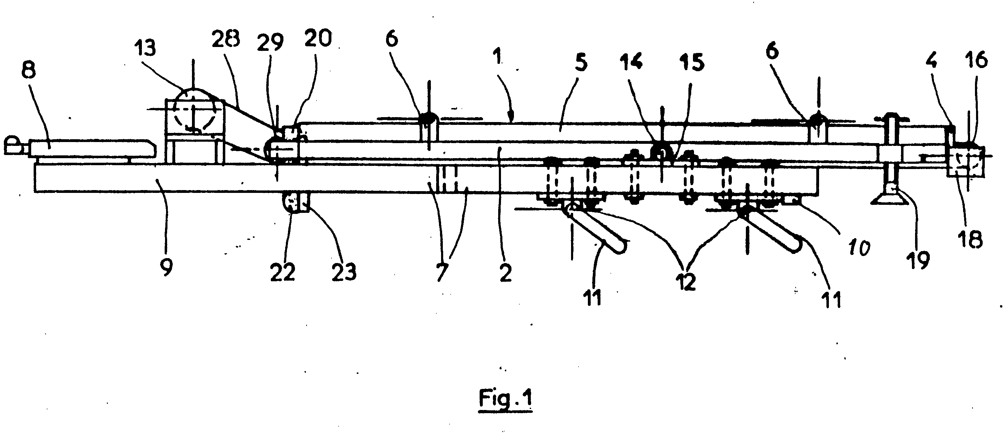

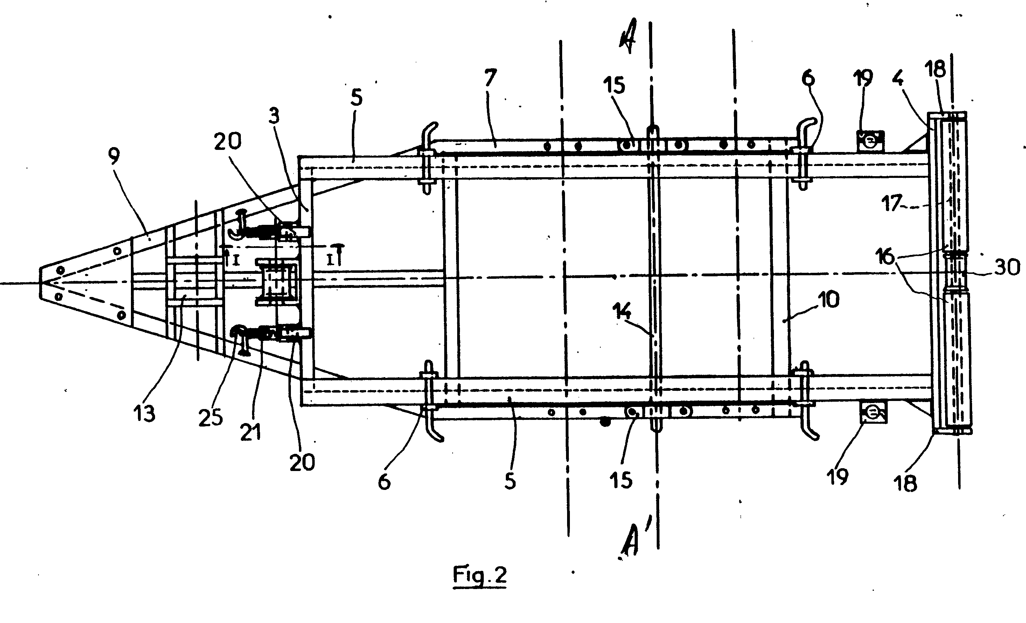

Comme représentée aux figures 1 et 2, la remorque selon l'invention comporte un plateau basculant 1.

Ce plateau affecte la forme d'un cadre de préférence rectangulaire constitué par deux longerons 2, d'une traverse avant 3 fixée perpendiculairement en extrémité des deux longerons 2 et une traverse 4 arrière plus large que la traverse 3 et parallèle à celle-ci fixée sur l'autre extrémité des longerons 2.

Sur chaque longeron 2 est fixée une glissière 5 ayant de préférence une section en forme de U à ailes inégales dirigées vers le haut, l'aile extérieure étant plus haute que l'aile placée vers l'intérieur de la remorque.

Chaque glissière 5 est dotée d'au moins un élément de verrouillage 6 permettant de bloquer en translation l'élément se trouvant sur la remorque et évitant ainsi tout risque de déplacement du dit élément au cours du transport.

Cet élément de verrouillage est de tous types connus et peut être un axe goupillé pénétrant dans deux orifices coaxiaux ménagés chacun dans deux ailes fixées de part et d'autre de la glissière 5.

La remorque selon l'invention comporte un cadre support 7 possédant une tête d'attelage 8 fixée sur un timon 9 par tous moyens connus. Ce cadre 7 est formé de longerons reliés entre eux par des traverses et en leur extrémité arrière par une traverse 10 dont le rôle sera expliqué plus avant.

Le cadre support 7 est doté de préférence de quatre organes de roulement reliés par des bras oscillants 11 à deux essieux 12 montés par tous moyens connus de l'homme de l'art sous le cadre support 7.

De préférence sur la partie avant du dit cadre support est fixé un treuil 13 permettant de tirer la charge.

Selon l'invention, le plateau basculant 1 pivote autour d'un axe de basculement AA' transversal au plan du dit plateau et situé sensiblement dans sa partie médiane de manière à ce que l'extrémité arrière du dit plateau soit près du sol pour le chargement et le déchargement.

Selon une forme préférentielle de réalisation, le plateau est fixé sur un arbre 14 d'axe AA'.

Le dit arbre est monté rotatif dans deux chapes 15 fixées sur les longerons du cadre support 7.

L'arbre 14 passe dans les longerons 2 du plateau basculant 1 par des orifices et est par exemple soudé à celui-ci au niveau des dits orifices.

Ce montage est réalisé pour des raisons de stabilité et de facilités de fabrication.

De plus, le plateau basculant 1 est doté de moyens facilitant le chargement et le déchargement d'éléments de stabilisation et d'organes de maintien en position horizontale.

Les moyens facilitant le chargement et le déchargement des éléments à transporter sont constitués par au moins deux rouleaux 16 cylindriques occupant sensiblement toute la largeur de la remorque et montés fous sur un arbre 17 fixé à l'arrière du plateau basculant 1.

L'arbre 17 est monté libre en rotation dans deux orifices coaxiaux ménagés dans deux parois 18 fixées perpendiculairement aux extrémités de la traverse 4 du plateau basculant.

L'élément lors du chargement et du déchargement roule sur ces rouleaux ce qui diminue les frottements et facilite ces opérations.

Les éléments de stabilisation sont constitués de préférence par deux béquilles 19 réglables en hauteur disposées chacune à l'extérieur de l'extrémité arrière du plateau basculant 1.

Ces béquilles peuvent être de tous types connus et permettent de rétablir le niveau du point où se crée l'effort du chargement par rapport au niveau des essieux et du cadre support et permettant ainsi d'éviter le vrillage du chassis basculant 1 au cours des opérations de chargement et de déchargement.

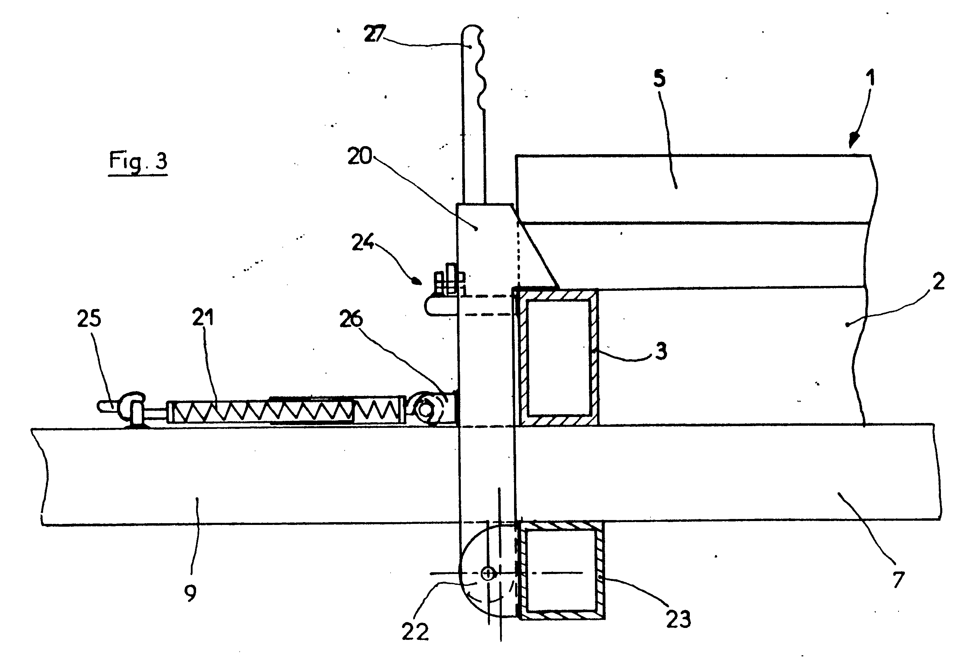

Les organes de maintien en position horizontale représentés en figure 3 sont constitués par au moins un crochet 20 pouvant être verrouillé et coopérant avec un organe élastique 21 afin de ne pas empêcher le basculement du plateau basculant 1.

Le crochet 20 est monté mobile en rotation dans une chape 22 fixée sur une traverse 23 solidaire du cadre support 7.

Le crochet 20 est de section transversale de préférence rectangulaire et possède sur son extrémité inférieure l'orifice d'articulaiton à la chape 23 et sur son extrémité supérieure une forme en triangle ayant un côté abrupt perpendiculaire au corps du crochet 20 contre lequel vient se bloquer la traverse avant 3 du plateau basculant 1.

Afin que lors du transport le crochet ne bascule et ne libère le plateau, il est réalisé un verrou 24 de tout type connu maintenant le crochet en position.

Lorsque le crochet est libéré du verrouillage, celui-ci bascule vers l'avant grâce à un organe élastique 21 constitué par un ressort.

Celui-ci est monté entre un crochet 25 solidaire du cadre support 7 et un étrier 26 solidaire du crochet 20.

Pour la remise en position du dit crochet et selon un mode de réalisation préférentiel, une poignée 27 est fixée sur l'extrémité supérieure du crochet 20.

Les dits crochets sont de préférence au nombre de deux symétriquement disposés par rapport à l'axe médian longitudinal de la remorque gardant ainsi la rigidité au vrillage du plateau basculant lors du transport. Pour une meilleure répartition des charges sur les organes de roulement, les essieux 12 sont disposés de telle manière à être sensiblement symétriques par rapport à l'axe de basculement AA'.

Ces deux essieux sont relativement proches de l'axe AA' afin de permettre le basculement du plateau 1.

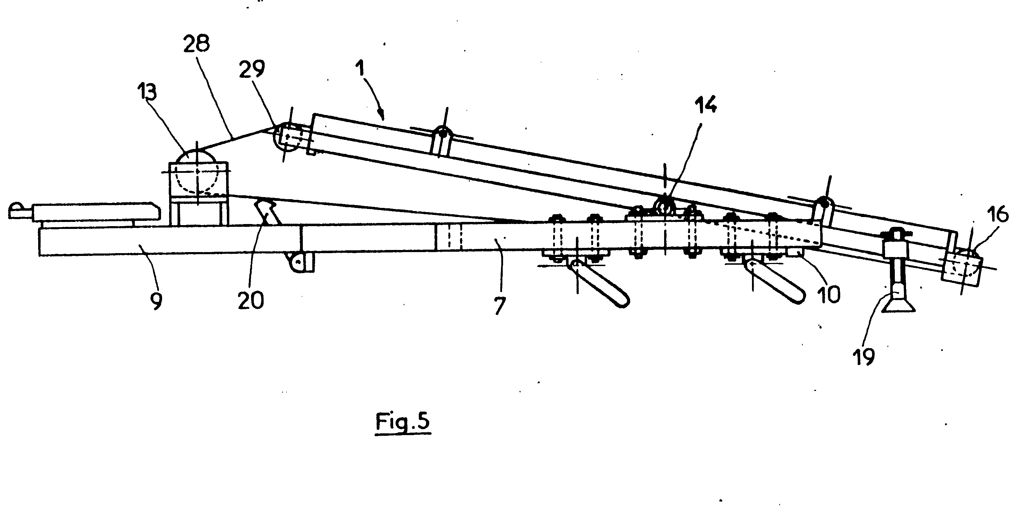

L'inclinaison maximale de celui-ci est donnée par la traverse 10 qui constitue un élement d'arrêt du plateau basculant (figure 5) et un élément de rigidification du cadre support.

Le chargement et le déchargement des éléments à l'aide d'un treuil 13 fixé sur le timon 9 de la remorque.

Le câble 18 du treuil est fixé à celui-ci par ses deux extrémités et est guidé par au moins deux galets 29 et 30 solidaires du plateau basculant 1.

Le galet 29 est monté fou à l'avant du plateau 1 par tous moyens connus et le galet 30 est monté fou sur l'axe 17 du plateau 1 entre les deux rouleaux cylindriques 16.

Ces galets sont disposés sur l'axe médian longitudinal de la remorque afin que la traction des éléments soit équilibrée.

Sur le brin de dessus du câble 28 est fixé un brin d'arrimage 31 doté en son extrémité libre d'un crochet 32.

Le brin d'arrimage 31 est fixé en un point du brin supérieur tel qu'il permette le chargement et le déchargement de l'élément par ce même câble.

Le brin de dessous du câble passe dans un évidement ménagé dans la traverse 3 du plateau basculant 1.

Lors de l'opération de déchargement et/ou du basculement à vide, le treuil tourne de telle manière à ce qu'il tende le brin de dessous. En se tendant, celui-ci s'appuie sur le galet 29 et à tendance à le soulever et donc à faire basculer le plateau 1.

Dans ce même temps, il s'exerce sur le brin 31 une traction permettant le déchargement de l'élément.

Pour l'opération de chargement et/ou de remise à l'horizontal à vide, le même phénomène se produit avec le brin de dessus.

Afin de rendre plus efficace le basculement du plateau, les brins de dessus et de dessous peuvent être croisés entre le galet 29 et le treuil 13.

La remorque basculante selon l'invention permet de charger ou de décharger des éléments volumineux et lours sans avoir à les soulever auparavant en utilisant des éléments simples et de fabrication aisée.

## Revendications

1. Remorque basculante pour le transport de baraques de chantier de maisons mobiles, de plateaux ou d'autres éléments analogues comportant un plateau (1) doté de glissières (5) entre lesquelles est guidée et maintenue la charge, un cadre support doté d'éléments de roulement et d'une tête d'attelage à un véhicule tracteur, le dit plateau étant monté en basculement sur le dit cadre suivant un axe (AA') transversal situé en avant de l'essieu arrière du véhicule, et un treuil (13) étant monté sur la dite remorque pour actionner un câble, remorque caractérisée en ce que le treuil (13) est monté sur le cadre support en avant du plateau basculant et dans l'angle décrit par le plateau entre ses positions extrèmes de basculement, que le câble (28) formant une boucle sans fin et fixé par ses deux extrémités au treuil (13), s'enroule autour d'un premier galet (30) monté à l'arrière du plateau basculant et qu'un deuxième galet (29) monté en avant du plateau basculant est disposé sous le brin de dessus du câble et au dessus du brin de dessous du câble et que le brin de dessus du câble est doté d'un brin d'arrimage (31) de la charge en sorte que lors du déchargement sous l'effet de la traction de la charge hors du plateau, le brin de dessous du câble appuie sous le deuxième galet (29) et aussure le basculement du plateau vers l'arrière et en sorte que lors du hissage de la charge le brin de dessus du câble en s'appuyant sur le deuxième galet (29) force le basculement du plateau vers sa position horizontale.

2. Remorque basculante selon la revendication 1 caractérisée en ce que le plateau basculant (1) est doté de moyens facilitant le chargement et la déchargement d'éléments de stabilisation et d'organes de maintien en position horizontale.

3. Remorque basculante selon les revendications 1 et 2 caractérisée en ce que les moyens facilitant le chargement et le déchargement sont constitués par au moins deux rouleaux cylindriques (16) occupant sensiblement toute la longueur de la remorque et montés fous sur l'arbre (17) fixé à l'arrière du plateau basculant (1).

4. Remorque basculante selon les revendications 1 et 2 caractérisée en ce que les éléments de stabilisation sont constitués par au moins deux béquilles (19) réglables en hauteur disposées chacune d'un côté de l'extrémité arrière du plateau basculant (1).

5. Remorque basculante selon les revendications 1 et 2 caractérisée en ce que les organes de maintien en position horizontale sont constitué par au moins un crochet (20) pouvant être vérrouillé et coopérant avec au moins un organe élastique (21) afin de ne pas empêcher le basculement du plateau basculant (1).

6. Remorque basculante selon la revendication 1 caractérisée en ce que les essieux (12) des éléments de roulement du cadre support (7) sont disposés de telle manière à être sensiblement symétriques par rapport à l'axe de basculement afin d'obtenir sur ces derniers une bonne répartition des charges.

7. Remorque basculante selon la revendication 1 caractérisée en ce que la traverse arrière (10) du cadre support constitue l'élément d'arrêt du plateau basculant (1) pour l'inclinaison maximale de celui-ci, et un élément de rigidification du dit cadre support.

8. Remorque basculante selon la revendication 1 caractérisée en ce que le brin d'arrimage (31) est doté en son extrémité libre d'au moins un crochet (32) afin que la charge puis se être chargée ou déchargée avec le même câble.

**Patentansprüche**

1. Kipphänger zum Transport von Baustellenbuden, fahrbaren Häusern, Platten oder anderen Bauteilen mit einem Sattelauflieger (flach) (1) mit Führungsbahnen (5), zwischen denen die Last geführt und gehalten wird, einem Halterungsrahmen mit Rollteilen und einem Kopf zum Ankuppeln an eine Zugmaschine, wobei besagter Sattelauflieger kippbar auf dem besagten Rahmen aufgebaut ist, hinter einer Querachse (AA') vor der hinteren Achse des Fahrzeugs, und eine Winde (13) auf besagten Hänger aufmontiert ist, um ein Seil zu betätigen, wobei der Hänger dadurch gekennzeichnet ist, dass die Winde (13) auf den Trägerrahmen vor dem kippbaren Sattelauflieger montiert ist, in dem Winkel, der von dem Sattelauflieger zwischen seinen Endkipppositionen beschrieben wird, und dass das Seil (28) eine Endlosschleife bildet und an seinen beiden Enden an der Winde (13) befestigt ist und sich um eine erste Rolle (30) aufwickelt, die an der Rückseite des kippbaren Sattelaufliegers montiert ist, und dass eine zweite Seilrolle (29) an der Vorderseite des kippbaren Sattelaufliegers unter dem oberen Seiltrumm und über dem unteren Seiltrumm angeordnet ist und dass das obere Seiltrum mit einem Lastverzurrungsende (31) versehen ist, sodass bei der Entladung unter Wirkung des Zugs der Last von der Sattelaufliegerfläche das untere Seiltrumm unter der zweiten Rolle (29) andrückt und das Kippen des Aufliegers nach hinten gewährleistet, und dass beim Anheben der Last durch das obere Seiltrumm unter Einwirkung auf die zweite Rolle (29) die Sattelaufliegerfläche in die horizontale Position gekippt wird.

2. Kippbarer Sattelauflieger gemäss Anspruch 1, dadurch gekennzeichnet, dass die kippbare Aufliegeplatte (1) mit Mitteln, die das Laden und Entladen von Stabilisierungsbauteilen erleichtern, und mit Organen zum Halten in horizontaler Position versehen ist.

3. Kippbarer Sattelauflieger gemäss Anspruch 1 und 2, dadurch gekennzeichnet, dass die Mittel, die das Laden und Entladen erleichtern, aus mindestens zwei zylindrischen Rollen (16) bestehen, die in etwa die ganze Länge des Hängers einnehmen und frei beweglich auf der Welle (17) montiert sind, die an der Rückseite der kippbaren Aufliegefläche (1) befestigt ist.

4. Kippbarer Sattelauflieger gemäss Anspruch 1 und 2, dadurch gekennzeichnet, dass die Stabilisierungselemente aus mindestens zwei Stützen (19) bestehen, die höhenverstellbar und jeweils auf einer Seite am hinteren Ende der kippbaren Sattelaufliegerfläche (1) angeordnet sind.

5. Kippbarer Sattelauflieger gemäss Anspruch 1 und 2, dadurch gekennzeichnet, dass die Organe zu Halten in der horizontalen Position aus mindestens einem Haken (20) bestehen, der sich verriegeln lässt und mit mindestens einem elastischen Organ (21) zusammenwirkt, um die Kippbewegung der kippbaren Sattelaufliegerfläche (1) nicht zu verhindern.

6. Kipphänger gemäss Anspruch 1, dadurch gekennzeichnet, dass die Achsen (12) der Rollelemente des Trägerrahmens (7) so angeordnet sind, dass symmetrisch zur Kippachse sind, um eine gute Lastverteilung zu erhalten.

7. Kipphänger gemäss Anspruch 1, dadurch gekennzeichnet, dass die hintere Querstrebe (10) des Trägerrahmens das Halteelement der kippbaren Sattelaufliegerfläche (1) für deren maximale Neigung bildet und ein Versteifungselement des besagten Trägerrahmens ist.

8. Kipphänger gemäss Anspruch 1, dadurch gekennzeichnet, dass ein Verzurrungsseiltrumm (31) an seinem freien Ende mit mindestens einem Haken (32) versehen ist, damit die Last mit dem gleichen Seil aufgeladen oder abgeladen werden kann.

**Claims**

1. A tipping trailer for transporting work site huts, mobile houses, flat trucks or similar elements including a platform (1) having slides (5) between which the load is guided and held in position, a support frame with rolling elements and a head for hitching to a towing vehicle, said platform being mounted for tipping on said frame along a transverse axis (AA') situated in front of the rear axle of the vehicle, and a winch (13) being mounted on said trailer for actuating a cable, which trailer is characterized in that the winch (13) is mounted on the support frame in front of the tipping platform and in the angle described by the platform between its endmost tipping positions, in that the cable (28) forming an endless loop and fixed by its two ends to the winch (13) winds around a first roller (30) mounted at the rear of the tipping platform and in that a second roller (29) mounted in front of the tipping platform is disposed under the top length of cable and above the bottom length of cable and in that the top length of cable is provided with a strand (31) for stowing the load, so that during unloading, under the effect of the pull of the load out of the platform, the bottom strand of cable bears under the second roller (29) and ensures rearward tipping of the platform and so that during hoisting of the load the top length of cable by bearing on the second roller (29) forces the platform to tip to its horizontal position.

2. Tipping trailer according to claim 1, characterized in that the tipping platform (1) is provided with means facilitating loading and unloading of stabilization elements and of members for holding in a horizontal position.

3. Tipping trailer according to claims 1 and 2, characterized in that the means facilitating loading and unloading are formed by at least two cylindrical rollers (18) occupying substantially the whole length of the trailer and mounted for free rotation on the shaft (17) fixed to the rear of the tipping platform (1).

4. Tipping trailer according to claims 1 and 2, characterized in that the stabilization elements are formed by at least two props (19) adjustable in height and disposed each on one side of the rear end of the tipping platform (1).

5. Tipping trailer according to claims 1 and 2, characterized in that the members for holding in a horizontal position are formed by at least one hook (20) which may be locked and cooperating with at least one resilient member (21) so as not to prevent tipping of the tipping platform (1).

6. Tipping trailer according to claim 1, characterized in that the axles (12) of the rolling elements of the support frame (7) are disposed so as to be substantially symmetrical with respect to the tipping axis so as to obtain a good load distribution thereon.

7. Tipping trailer according to claim 1, characterized in that the rear cross member (10) of the support frame forms the stopping element for the tipping platform (1) for the maximum inclination thereof, and an element for rigidifying said support frame.

8. Tipping trailer according to claim 1, wherein the stowing strand (31) is provided at its free end with at least one hook (32) so that the load may be loaded or unloaded with the same cable.

Fig.1

Fig.2

Fig. 3

Fig.4

0 094 280

Fig.5

0 094 280